# EUROPÄISCHE PATENTANMELDUNG

(11) **EP 0 711 657 A2**
(43) Veröffentlichungstag der Anmeldung: **15.05.1996**
(21) Anmeldenummer: 95115857.5
(22) Anmeldetag: 09.10.1995
(51) Int. Cl.: B32B 27/04, B32B 33/00, B32B 31/20, C08J 5/16

(54) **Verbundkörper aus Polytetrafluorethylen, Zwischenprodukte hierfür und Verfahren zu deren Herstellung**

(30) Priorität: 15.10.1994 DE 4437004
(71) Anmelder: HOECHST AKTIENGESELLSCHAFT, D-65926 Frankfurt am Main (DE)
(72) Erfinder: Michel, Wolfgang, Dr. Ing., D-84489 Burghausen (DE)

(57) **Zusammenfassung**

Verbundkörper mit einer gut gleitfähigen Oberfläche aus Polytetrafluorethylen (PTFE) enthalten aufeinanderfolgende Schichten aus a) PTFE, b) einem Copolymeren mit überwiegend Tetrafluorethylen-Einheiten, das gegenüber dem PTFE als Schmelzkleber wirkt, c) einem bis mindestens 400 °C beständigen Fasermaterial und d) mindestens einem schmelzverarbeitbaren Kunststoff. Hierzu werden zunächst die Schichten a) bis c) bei etwa 350 bis 400 °C verpreßt, worauf das so erhaltene Zwischenprodukt bei einer niedrigeren Temperatur mit dem oder den schmelzverarbeitbaren Kunststoff(en) in einem oder mehreren Schritten verpreßt werden kann.

## Beschreibung

Polytetrafluorethylen, im folgenden PTFE, ist nicht zuletzt wegen seines stark antiadhäsiven Verhaltens und der hohen Schmelzviskosität ein wertvoller Werkstoff. Diese Eigenschaften erschweren allerdings die Verbindung mit anderen Materialien außerordentlich. So läßt die geringe Oberflächenspannung von PTFE eine Benetzung durch Klebstoffe nicht zu, und eine Verschweißung scheitert in der Regel an der hohen Schmelzviskosität, die Schweißtemperaturen im Bereich von 370 °C erfordert, was für viele damit zu verbindenden Materialien, insbesondere Kunststoffe, unzuträglich ist.

Der Erfindung lag somit die Aufgabe zugrunde, Verbundkörper oder Formkörper herzustellen, in denen PTFE mit einem niedrigerschmelzenden Kunststoff fest verbunden ist, wobei dieser Kunststoff auch sehr viel weniger temperaturbeständig sein kann als PTFE.

Diese Aufgabe wird erfindungsgemäß dadurch gelöst, daß eine Schicht aus PTFE mit einem flächig angeordneten Copolymeren mit überwiegend Tetrafluorethylen(TFE)-Einheiten, das gegenüber PTFE als Schmelzkleber wirkt, und einem flächig angeordneten Fasermaterial, das bis mindestens 400 °C beständig ist, bei einer Temperatur von 350 bis etwa 400 °C verpreßt wird. Hierzu wird das Copolymere zweckmäßig in Form einer Folie eingesetzt. Man kann es auch in Form eines Granulats oder Pulvers auf das PTFE aufbringen, muß dann aber darauf achten, daß das Fasermaterial auf der gegenüberliegenden Seite des entstehenden Flächengebildes nicht wesentlich durch das Copolymer umschmolzen wird.

Das so erhaltene Zwischenprodukt ist lagerungsfähig und kann je nach Dicke in Form von Rollen oder Platten in den Handel gebracht werden.

Das Zwischenprodukt kann jedoch auch unmittelbar, nötigenfalls nach Abkühlen auf eine geeignete Temperatur, die sich nach den Eigenschaften des damit zu verbindenden Kunststoffes richtet, zum Endprodukt, dem Verbund- oder Formkörper, weiterverarbeitet werden. Hierzu wird der schmelzverarbeitbare Kunststoff in flächig angeordneter Form mit dem Zwischenprodukt verpreßt. Unter "flächig angeordnet" ist hierunter wie vorstehend eine Folie oder eine Schicht eines Pulvers oder Granulats, einer Paste, aber auch eine Platte zu verstehen. Die Verarbeitungstemperatur und der Preßdruck richten sich nach Art und Menge des schmelzverarbeitbaren Kunststoffs und sind vom Fachmann nach seinem Fachwissen auszuwählen oder anhand von einfachen Vorversuchen festzustellen. Hierbei umschmilzt der Kunststoff die freigebliebene Seite des flächig angeordneten Fasermaterials, wobei ein untrennbar verbundenes flächenhaftes Gebilde (Laminat) mit hervorragenden Eigenschaften entsteht. Die so erhaltenen Flächengebilde können ihrerseits - auf der Seite des niedrigerschmelzenden Kunststoffs - weiterlaminiert werden, beispielsweise durch Verpressen mit einer Folie aus dem gleichen oder einem damit verträglichen Kunststoff.

Bevorzugte Ausgestaltungen der Erfindung werden im folgenden näher erläutert.

Je nach dem beabsichtigten Einsatz des Verbundkörpers wird das PTFE als mehr oder weniger dicke Folie oder Platte eingesetzt. Falls erforderlich kann zur Beseitigung von Unebenheiten in den Oberflächen des PTFE-Materials und/oder des Preßwerkzeugs eine geeignete Zwischenlage eingebracht werden, beispielsweise ein - selbstverständlich hinreichend temperaturbeständiges - Flächengebilde aus einem Siliconmaterial, beispielsweise aus einem Silicongmmmi-Glasfasergewebe-Laminat.

Als Copolymer, das gegenüber PTFE als Schmelzkleber wirkt, kommen in erster Linie die Copolymeren in Betracht, die bisher schon zu Verbunden von PTFE mit sich selbst oder anderen Materialien eingesetzt wurden, nämlich Copolymere mit Perfluoralkyl-perfluorvinylether-Einheiten (US-A 3 946 136) oder einem von TFE verschiedenen Perfluoralken wie Hexafluorpropen (US-A 2 833 686). Besonders bevorzugt sind Copolymere aus 90 bis 99,5 Gew.-% TFE und 0,5 bis 10 Gew.-% Perfluoralkyl-perfluorvinylether mit Alkylresten von 1 bis 10 Kohlenstoffatomen, insbesondere von 1 bis 3 Kohlenstoffatomen. Besonders geeignet sind Copolymere aus 95 bis 99 Gew.-% TFE und 5 bis 1 Gew.-% des Perfluor(alkyl-vinyl)ethers.

Als Fasermaterial eignen sich Gewebe oder Vliese aus hinreichend temperaturbeständigen Fasern aus Glas, Keramik, Kohlenstoff, Metallen wie Edelstahl oder hochtemperaturbeständigen Kunststoffen wie Kondensationsprodukten aus Terephthalsäure und p-Phenylendiamin.

Maßgeblich ist, daß das flächig angeordnete Fasermaterial den Schmelzen eine mechanische Verankerung erlaubt und somit als Bindeglied oder Zwischenlage zwischen dem PTFE und dem schmelzverarbeitbaren Kunststoff wirken kann. Es ist somit beispielsweise auch möglich, mehr oder weniger lose Fasern erst mit beispielsweise pulverförmigem, als Schmelzkleber wirkendem Copolymer in eine flächige Form zu bringen und diese dann dem erfindungsgemäßen Verfahren zugrunde zu legen.

Als schmelzverarbeitbarer Kunststoff sind alle üblichen technischen Thermoplaste einsetzbar, beispielsweise die relativ niedrigschmelzenden Polymerisate Polyvinylchlorid (PVC), Polyethylen oder Polypropylen, wobei sich die Verarbeitung nach den Eigenschaften dieses Kunststoffes richtet. Im allgemeinen wird deshalb eine Abkühlung des Zwischenproduktes auf die geeignete Weiterverarbeitungstemperatur erforderlich sein.

Eine Ausgestaltung der Erfindung betrifft die Kaschierung des Zwischenproduktes mit einer Paste aus einem schmelzverarbeitbaren Kunststoff, insbesondere einer PVC-Paste. Die Schichtdicke der aufgebrachten Paste kann variieren: Soll die Schicht lediglich als Bindemittel für ein nachträglich aufgebrachtes Flächengebilde - Folie oder Platte - aus dem gleichen oder aus einem damit verträglichen Kunststoff dienen, so genügt eine Schichtdicke von bis zu etwa 100 µm, vorzugsweise 50 bis 80 µm. Das so erhaltene Produkt kann dann unmittelbar oder nach Abkühlen zu einem späteren Zeitpunkt weiterverarbeitet werden. Die Schichtdicke der Kaschierung kann jedoch auch einige Millimeter betragen, beispielsweise bis zu 3 mm, wobei nach dem Abkühlen entsprechende Platten erhalten werden. Geeignete Kunststoffpasten sind dem Fachmann bekannt. PVC-Pasten sind beispielsweise in der DE-A 42 26 289 und der darin genannten Literatur beschrieben.

In einer besonderen Ausgestaltung des Verfahrens kann die Weiterverarbeitung zum Verbundkörper jedoch auch mit hinreichend temperaturbeständigen Kunststoffen in einem Schritt erfolgen, beispielsweise mit flüssigkristallinen Polymeren wie vollaromatische Copolyester.

Die günstigsten Verarbeitungsbedingungen orientieren sich an den Eigenschaften der eingesetzten Ausgangsmaterialien. So wird der Druck zweckmäßigerweise auch bei der Abkühlung beibehalten. Es kann vorteilhaft sein, das Verpressen unter Inertgasschutz oder unter vermindertem atmosphärischem Druck durchzuführen. So kann durch eine Laminierung im Vakuum die Bildung von Blasen oder Hohlräumen zurückgedrängt werden. Die technische Durchführung des Verfahrens kann auf den bekannten Laminiermaschinen erfolgen. Bewährt haben sich Vakuum-Multilayer-Pressen oder Doppelbandpressen, wenn Endloslaminate von Rolle auf Rolle produziert werden sollen.

Die so erhaltenen Verbundkörper zeichnen sich durch vorteilhafte Eigenschaften aus, die häufig über die der Komponenten hinausgehen. So kann beispielsweise bei Verbundkörpern mit einer dünnen PTFE-Schicht eine Wärmeausdehnung ähnlich Stahl oder Keramik erzielt werden. Die Belastbarkeit unter Druck ist sehr hoch. Die Wärmeverformbarkeit und das Schweißverhalten kann innerhalb weiter Grenzen eingestellt werden.

Die Dicke der erfindungsgemäßen Verbundkörper kann ebenfalls in weiten Grenzen schwanken und unter 100 µm bis zu mehreren Millimetern betragen.

Da alle Verbundkörper auf den bekannten guten Eigenschaften des PTFE aufbauen, eignen sie sich insbesondere als Gleitlagerwerkstoff.

Die Erfindung wird in den folgenden Beispielen noch näher erläutert.

### Beispiel 1 (Zwischenprodukt)

In eine Vakuum-Mulitlayer-Presse wurde - von oben nach unten -
- ein Glasseidengewebe, 192 g/m² (Typ 91121 der Firma Interglas),
- eine Folie aus einem Polymer aus 96 Gew.-% TFE und 4 Gew.-% Perfluor(n-propyl-vinyl)ether, Schmelzindex (MFI) bei 372 °C und 5 kg Last 10 g/min, Dicke 25 µm, und
- eine PTFE-Platte, Dicke circa 2 mm,
Abmessung aller Proben 300 x 180 mm, eingebracht.

Als Druckausgleich gegen geringe Unebenheiten der Pressentisch-Platten wurde ein circa 3 mm dickes Glasfasergewebe-Siliconguumi-Laminat auf die PTFE-Platte gelegt.

Die Aufheizung von Raumtemperatur bis 370 °C (die 12 Minuten eingehalten wurden) erfolgte im Lauf von etwa 35 Minuten. Hierauf wurde die Presse durch Luftkühlung in etwa 85 Minuten auf 230 °C und dann im Lauf von weiteren 60 Minuten auf etwa 30 °C abgekühlt. Der mittlere spezifische Preßdruck betrug 0,6 bar (0,5 bis 0,8 bar).

Von dem so erhaltenen Zwischenprodukt wurden 20 mm breite Streifen abgeschnitten und der Schälwiderstand in einem Winkelschälversuch analog DIN 53 282 bei einer Abzugsgeschwindigkeit von 100 mm/min geprüft. Der Schälwiderstand betrug 25 bis 40 N/10 mm Streifenbreite.

### Beispiel 2 (Weiterverarbeitung des Zwischenprodukts)

Auf die Glasfaserseite des Zwischenprodukts nach Beispiel 1 wird eine 80 µm starke Schicht aus einer PVC-Paste aufgerakelt und bei 180 °C zum Gelieren gebracht. Das so erhaltene Flächengebilde eignet sich zur Herstellung gleitfähiger Überzüge.

Das Flächengebilde kann aber auch - unmittelbar nach dem Gelieren oder gegebenenfalls auch nach Abkühlen und Wiedererwärmen in einem getrennten Verfahrensschritt - mit einer PVC-Folie oder -Platte bei 180 °C unter einem Druck von 1 bar in einer Presse fest verbunden werden.

### Beispiel 3 (Einstufenverfahren)

Entsprechend Beispiel 1 wird ein Flächengebilde aus der PTFE-Platte, der Folie und dem Glasseidengewebe hergestellt, jedoch ohne Abkühlung bei etwa 350 °C und einem Druck von 115 bar mit einer 100 µm dicken Folie aus einem vollaromatischen Copolyester (®VECTRA C 950, Schmelztemperatur 320 bis 325 °C, Handelsprodukt der Hoechst AG) verpreßt.

## Patentansprüche

1. Verbundkörper, enthaltend aufeinanderfolgende Schichten aus
a) Polytetrafluorethylen (PTFE),
b) einem Copolymeren mit überwiegend Tetrafluorethylen-Einheiten, das gegenüber dem PTFE als Schmelzkleber wirkt,
c) einem bis mindestens 400 °C beständigen Fasermaterial und
d) mindestens einem schmelzverarbeitbaren Kunststoff.

2. Formkörper nach Anspruch 1, bei dem das PTFE in Form einer Folie oder Platte vorliegt.

3. Formkörper nach Anspruch 1 oder 2, dadurch gekennzeichnet, daß das Copolymere Einheiten eines Perfluoralkyl-perfluorvinylethers oder eines Perfluoralkens enthält.

4. Formkörper nach einem oder mehreren der vorhergehenden Ansprüche, bei dem das Fasermaterial Fasern aus Glas, Keramik, Kohlenstoff, Metallen oder Kunststoff enthält.

5. Formkörper nach einem oder mehreren der vorhergehenden Ansprüche, bei dem der schmelzverarbeitbare Kunststoff Polyvinylchlorid, Polyethylen, Polypropylen oder ein flüssigkristallines Polymeres ist.

6. Zwischenprodukt zur Herstellung eines Formkörpers nach den Ansprüchen 1 bis 5, gekennzeichnet durch die aufeinanderfolgenden Schichten a) bis c) gemäß Anspruch 1.

7. Verfahren zur Herstellung des Zwischenprodukts nach Anspruch 6, dadurch gekennzeichnet, daß man aufeinanderfolgende Schichten aus
a) PTFE,
b) einem Copolymeren mit überwiegend Tetrafluorethylen-Einheiten, das gegenüber dem PTFE als Schmelzkleber wirkt und
c) einem bis mindestens 400 °C beständigen Fasermaterial
bei einer Temperatur von etwa 350 bis etwa 400 °C zusammenpreßt.

8. Verfahren zur Herstellung eines Formkörpers nach Anspruch 1 bis 5, dadurch gekennzeichnet, daß man ein Zwischenprodukt nach Anspruch 7 mit einer Schicht aus mindestens einem schmelzverarbeitbaren Kunststoff unter Erwärmen verpreßt.

9. Verwendung der Formkörper nach den Ansprüchen 1 bis 5 zur Herstellung von gleitfähigen Oberflächen.

10. Verwendung der Formkörper nach den Ansprüchen 1 bis 5 als Gleitlagerwerkstoff.
